# EUROPEAN PATENT SPECIFICATION

(11) **EP 2 726 717 B1**
(45) Date of publication and mention of the grant of the patent: **09.09.2015**
(21) Application number: 12730878.1
(22) Date of filing: 20.06.2012
(51) Int. Cl.: F01N 3/20

(54) **PUMP ASSEMBLY**
PUMPENANORDNUNG
ENSEMBLE POMPE

(30) Priority: 28.06.2011 EP 11171730
(43) Date of publication of application: 07.05.2014
(73) Proprietor: Delphi International Operations Luxembourg S.à r.l., 4940 Bascharage (LU)
(72) Inventor: WRIGHT, Keith, Chatham Kent ME5 7RS (GB)
(74) Representative: Neill, Andrew Peter
(86) International application number: PCT/EP2012/061853
(87) International publication number: WO 2013/000793

(56) References cited:
- EP-A1- 1 878 920
- DE-A1-102008 054 686
- US-A1- 2010 313 553

## Description

### Field of the invention

The present invention relates to a pump assembly. More particularly, but not exclusively, the invention relates to a dosing pump for a selective catalytic reduction system.

### Background to the invention

It is known that exhaust gases from internal combustion engines contain substances which are harmful to the environment and which can pose a threat to public health. For many years, a sustained effort has been made within the automotive industry to reduce the release to the atmosphere of harmful substances carried in exhaust gases, both by modifying the combustion process itself to give a reduced yield of harmful combustion products, and by treating the exhaust gases before their emission into the atmosphere, for example by providing a catalyst to induce chemical breakdown of the harmful constituents, particularly the oxides of nitrogen (NO*ₓ*), into benign compounds.

One strategy for reducing NO*ₓ* emissions, known as selective catalytic reduction or SCR, involves the introduction of a reagent comprising a reducing agent, typically a liquid ammonia source such as an aqueous urea solution, into the exhaust gas stream. The reducing agent is injected into the exhaust gas upstream of an exhaust gas catalyst, known as an SCR catalyst, typically comprising a mixture of catalyst powders such as titanium oxide, vanadium oxide and tungsten oxide immobilised on a ceramic honeycomb structure. Nitrogen oxides in the exhaust gas undergo a catalysed reduction reaction with the ammonia source on the SCR catalyst, forming gaseous nitrogen and water. An example of an SCR system is described in the Applicant's European Patent Application Publication No. EP-A-2131020.

SCR systems typically include a reagent dosing pump for delivering reagent to the exhaust gas stream.

In one known reagent dosing pump, a solenoid-actuated pumping arrangement is provided to increase the pressure of the reagent, and the pump includes an atomising nozzle that receives the reagent from the pumping arrangement and delivers it from an outlet end into the exhaust gas stream. The nozzle is close-coupled to the pumping arrangement, so that the nozzle and the pumping arrangement form a single unit. The outlet end of the nozzle may be positioned directly in the exhaust gas stream, so that the pumping arrangement is located close to the outside of the exhaust pipe that conveys the exhaust gases.

Examples of such pumps are described in the Applicant's European Patent Application Publication No. EP-A-1878920.

The pumping work conducted by the dosing arrangement of such solenoid actuated pumps is created by a solenoid coil acting on the magnetic armature of a plunger armature assembly.

The maximum temperature at which urea-based reducing agents can be used is somewhat limited. Urea crystals tend to precipitate when the temperature of the solution is greater than approximately 70°C. Precipitation is undesirable because the precipitates can cause blockages in the delivery system, for example in the small-diameter outlets typically provided in the outlet end of the atomising nozzle. In addition, the formation of precipitates alters the concentration of the remaining solution, so that the effective quantity of ammonia delivered to the exhaust flow becomes uncertain. This could lead to inefficient catalysis and an insufficient reduction in NO*ₓ* emissions.

It is therefore desirable, in many cases, to provide cooling means to cool the reagent in an SCR system and, in particular, in the reagent dosing pump, to prevent overheating of the reagent. Furthermore, when solenoid-actuated pumping arrangements are used, it is also desirable to cool the solenoid coil since the performance of solenoid actuators can decrease at high temperatures. Many known pump assembly arrangements therefore include a water cooling system, e.g. by means of the provision of a water jacket around the solenoid actuator and the provision of water input and output ports to the jacket in order to provide a flow of cooling water.

In designing and optimising pump assemblies there are a number of requirements that need to be considered. Firstly, packaging of the pump assembly within the engine system is increasingly challenging. The mass of such an assembly is also important in ensuring the product is robust in its attachment to a thin walled exhaust section, and subsequent vibrations seen in use. And finally, one further issue which is important to the integration of a new water cooled product in such an environment is the heat input in to the water cooling system.

One area which drives opportunities to improve all of the above points is size and arrangement of the solenoid coil. On the design described in EP1878920, a terminal block is provided to interface between the coil windings of the solenoid coil of the actuator and an electrical supply cable (the solenoid cable). However, this approach increases the packaging size of the coil, and hence the water jacket required to house it. There is therefore a knock on effect which impactes the size, mass and surface area of the doser exposed to the high ambient temperature environment.

It is therefore an object of the present invention to provide a pump assembly for use in an engine system that substantially overcomes or mitigates the above mentioned problems.

### Summary of the invention

According to a first aspect of the present invention there is provided a pump assembly for use in a selective catalytic reduction system, the pump assembly comprising: a pump sub-assembly defining a pump axis (A); and a housing sub-assembly including a cavity for receiving the pump sub-assembly and comprising an inlet port for receiving a reagent for supply to the pumping sub-assembly via a flow path; wherein at least one seal member is provided to seal the pump sub-assembly within the housing sub-assembly, the seal member being provided in a groove in an outer face of the pump sub-assembly, the seal member providing a fluid tight seal and wherein the pump sub-assembly comprises a pump core, an outer pole member and a solenoid coil, the core, pole member and coil being provided within a coil over-moulding member.

The present invention provides a pump assembly which seeks to simplify assembly by substantially moving the complexity to one outsourced subassembly. In particular, the invention provides a pump assembly comprising housing and pump sub-assemblies in which an outer surface of the pump sub-assembly is provided with grooves for receiving seal member(s) to provide fluid tight seals within the pump assembly. By providing the seal members within grooves located on one component (the pump sub-assembly) the level of machining necessary in the housing sub-assembly (which would generally be made of a cast metal) is reduced which reduces the complexity of the housing sub-assembly and also saves costs on producing the housing.

The pump assembly may conveniently comprise seal member(s) between internal sections of the pump assembly to provide fluid tight seals between the reagent and, for example, a cooling fluid such as water. In such an arrangement therefore the pump assembly conveniently further comprises a compartment defined in part by the pump and housing sub-assemblies wherein the at least one seal member comprises a compartment seal member arranged to separate the compartment and flow path, the compartment seal member being provided in a groove in an outer face of the pump sub-assembly, the compartment seal member providing a fluid tight seal between the compartment and the flow path.

The pump assembly may also conveniently comprise seal member(s) between an internal section of the pump assembly and an opening in the housing sub-assembly. In such an arrangement therefore the housing sub-assembly may conveniently comprise a drilling having an opening in an outer surface of the housing sub-assembly, and the pump sub-assembly comprises a neck portion of substantially complementary shape to the drilling wherein the at least one seal member comprises a drilling seal member arranged to seal the neck portion in the drilling, the drilling seal member being provided in a groove in an outer face of the neck portion of the pump sub-assembly and providing a fluid tight seal between the opening of the drilling and the flow path.

The neck portion may be disposed about axis A and define a bore arranged to receive electrical connector means for connection to a solenoid coil. The axis of the bore may be coincident with axis A.

Preferably the over-moulding member may be formed from plastic. It is noted that the plastic over-moulding member may be processed more easily than the housing sub-assembly to provide the grooves required to receive the seal members.

Conveniently the flow path comprises one or more flow ports provided through the body of the over-moulding member.

Conveniently a reagent gallery may be defined between the housing and pump sub-assemblies, the one or more flow ports being arranged to open into the gallery and the gallery being in fluid communication with the inlet port.

Conveniently the housing sub-assembly may define a reagent passage from the inlet port to the gallery, the flow path being provided by the reagent passage, the gallery and the one or more flow ports.

In order to improve reagent flow into the pump assembly the body of the over-moulding member may comprise a plurality of flow ports.

Where the pump sub-assembly comprises a metallic back plate, the back plate preferably comprises one or more drillings arranged such that each flow port aligns with a drilling.

Where the pump assembly is connected to an electrical connector member the electrical connections provided by the member (the solenoid coil cable) may conveniently be routed through the over-moulding member in between the reagent flow ports leading to the solenoid coil.

According to a second aspect of the present invention there is provided a method of manufacturing a pump assembly comprising manufacturing a pump sub assembly by: providing a blank disk member of a material having a relatively high magnetic permeability; deep drawing the blank disk member to form an outer pole piece, the outer pole piece defining an internal volume with an opening; providing a coil former, the coil former defining an internal volume; winding coil wire onto the coil former to form a solenoid coil; inserting the solenoid coil into the internal volume of the outer pole piece; pressing a back stop plate into the outer pole piece, the back stop plate having at least one drilling through the plate; injection moulding an over-mould member to encapsulate the outer pole piece and solenoid coil; forming at least one flow port through the over-moulding member, the at least one flow port aligning with the at least one drilling in the back stop plate; forming at least one groove in the outer face of the over-mould member.

The method may further comprise inserting an actuator pump core into the internal volume of the coil former.

The method may further comprise placing an O ring sealing member into the at least one groove in the outer face of the over-mould member and inserting the pump sub-assembly into a housing sub-assembly.

Preferred and/or optional features of each aspect of the invention may be used, alone or in appropriate combination, in the other aspects also.

### Brief description of the drawings

Embodiments of the present invention will now be described, by way of example only, with reference to the accompanying drawings, in which like reference numerals are used for like parts, and in which:
Figure 1 shows a known pump assembly;
Figure 2 shows a pump assembly according to an embodiment of the present invention.

### Detailed description of embodiments of the invention

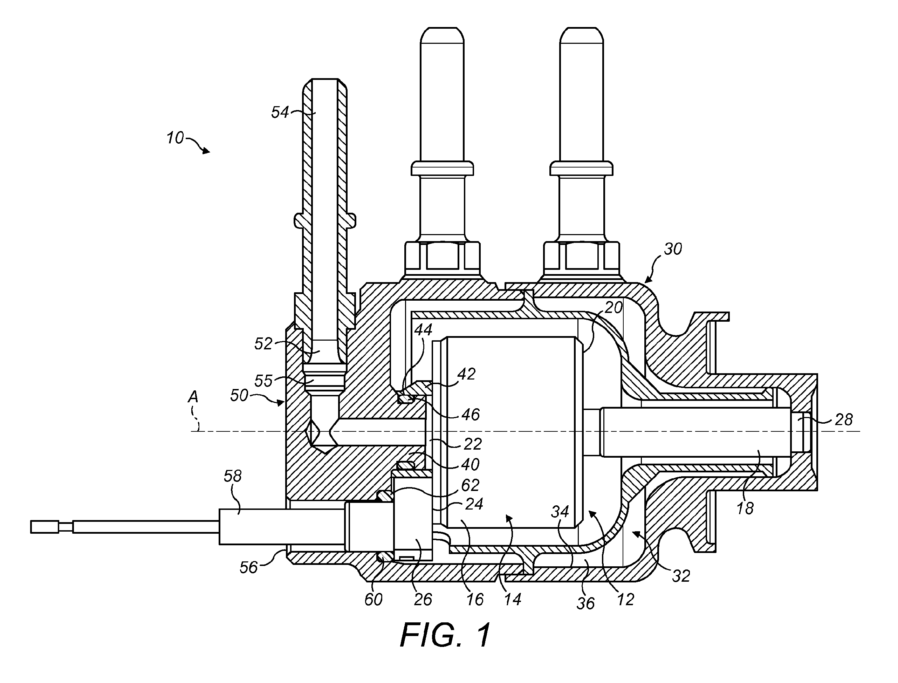

A known pump assembly 10 is shown in Figure 1.

Referring Figure 1, the pump assembly 10 includes a reagent dosing unit with an integrated pump and nozzle arrangement, referred to hereafter as a reagent dosing pump sub-assembly 12. The pump sub-assembly 12 is a reagent dosing pump of any suitable type, for example as described in EP-A-1878920, to which reference can be made for further details of the pump sub-assembly 12.

The pump sub-assembly 12 comprises a pump housing 14 having a generally cylindrical pump body portion 16 that defines a pump axis (axis A in Figure 1), and a generally cylindrical nozzle portion 18 that extends from a first face 20 of the body portion 16 along the pump axis A. The nozzle portion 18 has a relatively small diameter compared to the body portion 16.

The body portion 16 of the pump housing 14 houses a pumping mechanism (not shown), such as a solenoid-actuated pumping mechanism. In use, the pumping mechanism receives reagent through a reagent inlet 22 provided on a second face 24 of the body portion 16, opposite the first face 20. An electrical connection point 26 is also located on the second face 24 of the body portion 16, to provide an operating current to the solenoid actuator of the pumping mechanism. As is known from EP-A-1878920, the pumping mechanism includes a reciprocating pumping element, such as a plunger or piston, and is arranged to increase the pressure of a pre-defined quantity of reagent on each cycle of the pumping element.

The nozzle portion 18 of the pump housing 14 houses a delivery passage (not shown) that, in use, receives the pressurised reagent from the pumping mechanism, and conveys it to a reduced-diameter outlet end 28 of the nozzle portion 18. The outlet end 28 houses an atomising nozzle that atomises the reagent as it exits the pump sub-assembly 12.

The pump assembly 10 also includes a housing sub-assembly 30 having an internal cavity 32 in which the pump 12 is received. The cavity 32 is defined by an internal wall 34 of the housing sub-assembly 30. In general terms, the shape of the cavity 32 is an enlarged version of the shape defined by the pump housing 14. In this way, the internal wall 34 of the cavity 32 is spaced from the pump housing 14 to define a volume/compartment 36 for cooling fluid therebetween.

The housing sub-assembly 30 is generally made from cast stainless steel.

In a region of the housing sub-assembly 30 remote from the outlet end 18 of the pump, a projection or land 40 extends axially from the internal wall 34 of the cavity 32 towards the outlet end 18 of the pump, to meet the inlet port 22 on the second face 24 of the housing pump body portion 16. A collar 42 is provided on the second face 24 of the pump body portion 16 that receives the land 40. An O-ring 44 is provided to create a fluid-tight seal between the collar 42 and the land 40. The O-ring 44 is received in an annular ring 46 machined into the body of the housing sub-assembly 30.

The seal provided by the O-ring 44 prevents leakage of reagent into the compartment 36 between the land 40 of the housing sub-assembly 30 and the collar 42 of the pump housing 14.

The end of the housing sub-assembly 30 remote from the outlet end 18 comprises a connection block 50 of generally cuboidal shape. A top face of the connection block 50 is provided with a reagent inlet port 52 that receives a tubular reagent inlet connector 54.

The inlet connector 54 extends radially with respect to the pump axis A and is connected to a reagent supply line (not shown) in use.

A filter 55 is located in the flow path between the inlet connector 54 and the reagent inlet 22 of the pump 12. In this embodiment, the filter 55 is received in the inlet port 54. The filter 55 is conveniently a disc filter, arranged to prevent particulate contaminants in the reagent, such as urea crystals, from entering the pump 12.

The connection block 50 is also provided with a drilling 56 to admit an electrical connector 58. The electrical connector 58 connects with the electrical connection point 26 of the pump 12. A further O-ring 60 is provided to seal the electrical connector 58 in the drilling 56. The O-ring 60 is again provided in an annular groove 62 provided in the body of the housing sub-assembly.

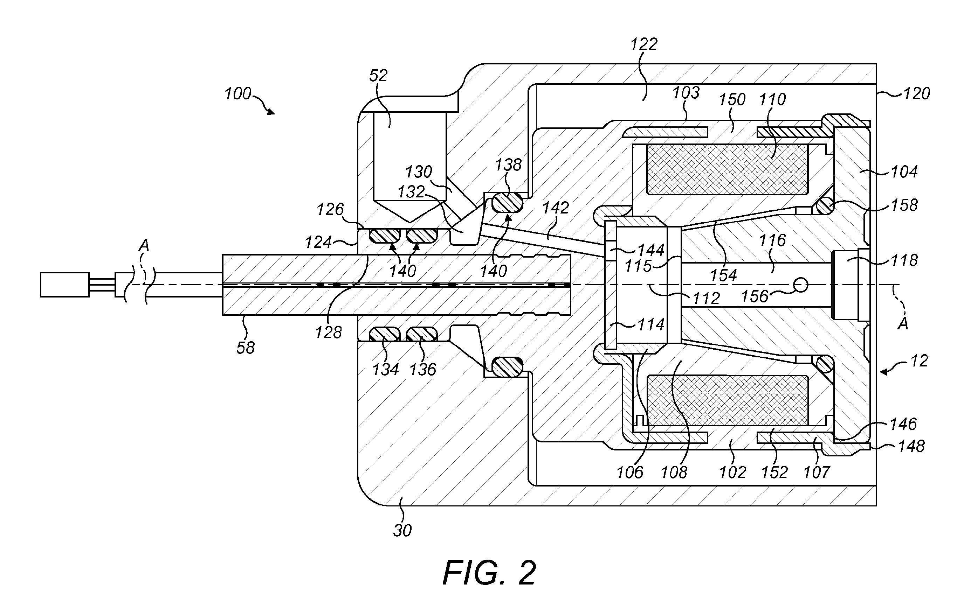

Figure 2 shows a pump assembly 100 in accordance with an embodiment of the present invention. Like features between Figures 1 and 2 are referred to with reference to the same reference numerals

The pump assembly 100 of Figure 2 comprises a pump sub-assembly 12 contained within a water cooled housing sub-assembly 30.

The pump sub-assembly 12 comprises an over-moulding member 102 and a solenoid actuator 103, the solenoid actuator 103 comprising: an actuator core (also referred to as pump core or inner pole piece) 104, an outer pole piece 106, a magnetic sleeve 107, a bobbin 108 and a solenoid coil 110, the solenoid coil being carried on the bobbin. The components of the actuator are, in turn, supported by the over-moulding member. A pumping region 112 within the pump sub-assembly 12 is provided by a volume defined by the outer pole piece 106, a back plate member 114 and a top face 115 of the actuator core 104. A bore 116 is provided within the actuator core 104. At the end of the bore remote from the pumping region 112 is a pumping chamber region 118.

The housing sub-assembly 30 comprises a cavity 120 for receiving the pump sub-assembly 12, the cavity being dimensioned such that a compartment 122 is defined between the housing 30 and pump 12 sub-assemblies in the general region of the solenoid actuator 103. In use, a coolant, e.g. water, is supplied via a hydraulic connector (not shown in Figure 2) to the compartment 3 to provide water cooling of the actuator.

The housing sub-assembly 12 comprises a reagent inlet port 52 wherein a reagent connector (not shown) can be interfaced with the housing sub-assembly 30 in order to supply a reagent, e.g. Adblue reagent.

The pump sub-assembly 12 further comprises a neck portion 124 remote from the solenoid actuator, the neck portion being dimensioned to be received within a drilling 126 in the body of housing sub-assembly 30. The neck portion 124 in turn comprises a bore 128 that is coincident with the pump assembly axis A. In use, the bore 128 receives an electrical connector cable 58 for connection to terminals of the solenoid coil wire 110.

The reagent flows from the inlet port 52 through a second drilling 130 in the housing sub-assembly 30 to a radial gallery 132 defined between the housing sub-assembly 30 and the neck portion 124 of the pump sub-assembly 12. The gallery 132 permits assembly of the pump sub-assembly into the housing sub-assembly and also allows orientation of the pump sub-assembly relative to the housing sub-assembly during this process.

The reagent gallery 132 is sealed from the outside environment in the region of the neck portion 124 by two O ring seals (134, 136) and sealed from the main housing water chamber 122 via a third O ring seal 138, all of which are retained by suitable O Ring grooves 140 moulded as part of the coil over-moulding member 102. Although, two O rings are shown (134, 136) in the neck portion 124 of the pump sub-assembly, it is noted that a single O ring seal would be sufficient for this primary function.

From the gallery 132, reagent is then routed through the coil over-moulding member 102 via a number of flow ports 142, one of which is visible in Figure 2. It is however noted that three or four ports could be provided equispaced around the axis A to provide efficient fluid communication between the gallery 132 and the internal pumping region 112 of the pump sub-assembly 12.

As reagent exits the flow port 142 it then passes through a drilling 144 in the non magnetic plunger back stop plate 114 before entering the pumping region 112. With the reagent delivered to the pumping zone 112, the flow path resumes the route as described in EP1878920. Note that the drilling 144 may be a port that is drilled or manufactured by other means (e.g. produced by stamping/fine blanking etc.).

It is noted that the drilling 144 in the back plate 114 is arranged during assembly to line up with the port 142 in the over-moulding member 102. In the event of multiple ports 142 the back stop plate would comprise an equal number of drillings 144 in the same orientation as the ports 142.

The over-moulding member 102 is formed via an injection moulding method. One potential method for manufacturing the ports and aligning them with the drillings 144 of the back stop plate 114 would be to align the drillings 144 of the back plate 114 with the removable cores of a mould tool when injection moulding the over-moulding member 102. Alignment is important as it permits the routing of the solenoid coil cable 58 to the coil wire terminals (not shown) which would need to pass within (in between) the gaps of the reagent ports 142.

To allow the assembly of the plunger back stop accurately and for the solenoid to operate correctly the magnetic outer pole piece 106 and magnetic outer sleeve 107 are formed from one deep drawn component, which also incorporates a locating face 146 and crimp feature 148 for the pump core 104. Forming the outer pole piece 106 and magnetic outer sleeve 107 via a deep draw process reduces material waste compared to a process where the components are formed by machining.

The pump sub-assembly 12 may therefore be assembled by winding the coil wire 110 around the coil former or bobbin 108. The wound coil former (110, 108) can then be slid into the magnetic drawn component 107, which will have a slot (not shown in this view) to receive the bobbin terminals. Then with the back plate 114 in place, and flow port 142 cores aligned to the back plate ports 144 over moulding will take place over the whole pump sub-assembly 12. Holes 150 in the magnetic outer sleeve 107 permit filling of the volume 152 between the coil windings 110 and the outer sleeve inside face 107.

The axial positioning of the coil wire 58 allows the water cooled cavity 122 within the housing to be optimized and sized primarily for the purposes of cooling. The overall outside diameter of the housing sub-assembly 30 may therefore be reduced.

As noted above, the pumping mechanism of the pump sub-assembly is known from, for example EP-A-1878920. Briefly however, a supply passage 154 is defined by an annular cavity between the coil former 108 and the actuator core 104. A plurality of filling ports 156 (of which one is shown in Figure 2) comprising a radial through bore, extend from the axial bore 116 to the supply passage 154.

A reciprocating pumping element, such as a plunger or piston (not shown in Figure 2) is slidably accommodated within the bore 116. A disc-shaped armature (also not shown in Figure 2) is attached to the plunger.

In order to dispense reagent, a current is passed through the solenoid coil 110 to energise the coil and induce a magnetic field around the coil. The resulting magnetic field exerts a force on the armature which, in turn, drives a pumping stroke of the plunger. By means of the reciprocating plunger reagent is pumped from the internal pumping region 112 via the passage 154 and ports 156 to the pumping chamber 118 and then out to an adjoining nozzle tube (not shown in Figure 2). A further seal member 158 is provided between the coil former 108 and actuator core 104.

Further variations and modifications not explicitly described above may also be contemplated without departing from the scope of the invention as defined in the appended claims.

## Claims

1. A pump assembly (100) for use in a selective catalytic reduction system, the pump assembly comprising:
a pump sub-assembly (12) defining a pump axis (A); and
a housing sub-assembly (30) including a cavity (120) for receiving the pump sub-assembly and comprising an inlet port (52) for receiving a reagent for supply to the pump sub-assembly via a flow path (130, 132, 142);
wherein at least one seal member (134, 136, 138) is provided to seal the pump sub-assembly within the housing sub-assembly, the seal member being provided in a groove (140) in an outer face of the pump sub-assembly, the seal member providing a fluid tight seal,
**characterized in that** the pump sub-assembly comprises a pump core (104), an outer pole member (106) and a solenoid coil (110), the core, pole member and coil being provided within a coil over-moulding member (102).

2. A pump assembly as claimed in Claim 1, further comprising a compartment (122) defined in part by the pump and housing sub-assemblies wherein the at least one seal member comprises a compartment seal member (138) arranged to separate the compartment and flow path, the compartment seal member being provided in a groove in an outer face of the pump sub-assembly, the compartment seal member providing a fluid tight seal between the compartment and the flow path.

3. A pump assembly as claimed in Claim 1 or 2, wherein the housing sub-assembly comprises a drilling (126) having an opening in an outer surface of the housing sub-assembly, and the pump sub-assembly comprises a neck portion (124) of substantially complementary shape to the drilling wherein the at least one seal member comprises a drilling seal member (134, 136) arranged to seal the neck portion in the drilling, the drilling seal member being provided in a groove in an outer face of the neck portion of the pump sub-assembly and providing a fluid tight seal between the opening of the drilling and the flow path.

4. A pump assembly as claimed in Claim 3, wherein the neck portion is disposed about axis A and defines a bore (128) arranged to receive electrical connector means (58) for connection to a solenoid coil (110).

5. A pump assembly as claimed in any preceding claim, wherein the over-moulding member is formed from plastic.

6. A pump assembly as claimed in any preceding claim, wherein the flow path comprises one or more flow ports (142) provided through the body of the over-moulding member.

7. A pump assembly as claimed in Claim 6, wherein a reagent gallery (132) is defined between the housing and pump sub-assemblies, the one or more flow ports (142) being arranged to open into the gallery and the gallery being in fluid communication with the inlet port (52).

8. A pump assembly as claimed in Claim 7, wherein the housing sub-assembly defines a reagent passage (130) from the inlet port to the gallery, the flow path being provided by the reagent passage, the gallery and the one or more flow ports.

9. A pump assembly as claimed in any one of Claims 6 to 8, wherein the body of the over-moulding member comprises a plurality of flow ports (142).

10. A pump assembly as claimed in Claim 9, wherein the pump sub-assembly comprises a metallic back plate (114) having one or more drillings (144), each flow port being arranged to align with a drilling.

11. A pump assembly as claimed in either of Claims 9 or 10 when dependent on Claim 4, wherein solenoid coil cable from the electrical connector member (58) is routed through the over-moulding member between reagent flow ports to the solenoid coil.

12. A method of manufacturing a pump assembly comprising manufacturing a pump sub assembly by:
providing a blank disk member of a material having a relatively high magnetic permeability;
deep drawing the blank disk member to form an outer pole piece, the outer pole piece defining an internal volume with an opening;
providing a coil former (108), the coil former defining an internal volume;
winding coil wire (110) onto the coil former to form a solenoid coil;
inserting the solenoid coil into the internal volume of the outer pole piece (106);
pressing a back stop plate (114) into the outer pole piece, the back stop plate having at least one drilling through the plate;
injection moulding an over-mould member (102) to encapsulate the outer pole piece and solenoid coil;
forming at least one flow port (142) through the over-moulding member, the at least one flow port aligning with the at least one drilling in the back stop plate;
forming at least one groove (140) in the outer face of the over-mould member.

13. A method as claimed in Claim 12, further comprising inserting an actuator pump core into the internal volume of the coil former.

14. A method as claimed in Claim 12 or 13 comprising placing an O ring sealing member into the at least one groove in the outer face of the over-mould member and inserting the pump sub-assembly into a housing sub-assembly.

## Patentansprüche

1. Eine Pumpenanordnung (100) zur Verwendung in einem selektiven katalytischen Reduktionssystem, wobei die Pumpenanordnung aufweist:
eine Pumpe-Teilanordnung (12), die eine Pumpenachse (A) definiert; und
eine Gehäuse-Teilanordnung (30), die einen Hohlraum (120) zur Aufnahme der Pumpe-Teilanordnung umfasst und eine Einlassöffnung (52) aufweist zur Aufnahme eines Reagenzes zur Lieferung an die Pumpe-Teilanordnung über einen Strömungspfad (130, 132, 142);
wobei zumindest ein Dichtungselement (134, 136, 138) vorgesehen ist, um die Pumpe-Teilanordnung in der Gehäuse-Teilanordnung abzudichten, wobei das Dichtungselement in einer Rille (140) in einer Außenfläche der Pumpe-Teilanordnung vorgesehen ist, wobei das Dichtungselement eine Fluid-dichte Abdichtung vorsieht,
**dadurch gekennzeichnet, dass** die Pumpe-Teilanordnung einen Pumpenkern (104), ein äußeres Pol-Element (106) und eine Solenoidspule (110) aufweist, wobei der Kern, das Pol-Element und die Spule in einem Spule-Umspritzung-Element (102) vorgesehen sind.

2. Eine Pumpenanordnung gemäß Anspruch 1, die weiter eine Kammer (122) aufweist, die teilweise durch die Pumpe- und Gehäuse-Teilanordnungen definiert ist, wobei das zumindest eine Dichtungselement ein Kammer-Dichtungselement (138) aufweist, das ausgebildet ist zum Trennen der Kammer und des Strömungspfads, wobei das Kammer-Dichtungselement in einer Rille in einer Außenfläche der Pumpe-Teilanordnung vorgesehen ist, wobei das Kammer-Dichtungselement eine Fluid-dichte Dichtung zwischen der Kammer und dem Strömungspfad vorsieht.

3. Eine Pumpenanordnung gemäß Anspruch 1 oder 2, wobei die Gehäuse-Teilanordnung eine Bohrung (126) aufweist mit einer Öffnung in einer äusseren Oberfläche der Gehäuse-Teilanordnung, und die Pumpe-Teilanordnung einen Halsabschnitt (124) einer im Wesentlichen komplementären Form zu der Bohrung aufweist, wobei das zumindest eine Dichtungselement ein Bohrungsdichtungselement (134, 136) aufweist, das ausgebildet ist zum Abdichten des Halsabschnitts in der Bohrung, wobei das Bohrungsdichtungselement in einer Rille in einer Außenfläche des Halsabschnitts der Pumpe-Teilanordnung vorgesehen ist und eine Fluid-dichte Dichtung zwischen der Öffnung der Bohrung und dem Strömungspfad vorsieht.

4. Eine Pumpenanordnung gemäß Anspruch 3, wobei der Halsabschnitt um die Achse A angeordnet ist und eine Bohrung (128) definiert, die ausgebildet ist zum Aufnehmen von elektrischen Verbindungsmitteln (58) zur Verbindung mit einer Solenoidspule (110).

5. Eine Pumpenanordnung gemäß einem vorhergehenden Anspruch, wobei das Umspritzelement aus Kunststoff gebildet ist.

6. Eine Pumpenanordnung gemäß einem vorhergehenden Anspruch, wobei der Strömungspfad eine oder mehrere Strömungsöffnung(en) (142) aufweist, die durch den Körper des Umspritzelements vorgesehen ist/sind.

7. Eine Pumpenanordnung gemäß Anspruch 6, wobei eine Reagenz-Galerie (132) zwischen dem Gehäuse und den Pumpe-Teilanordnungen definiert ist, wobei die eine oder mehreren Strömungsöffnung(en) (142) ausgebildet ist/sind zum Öffnen in die Galerie und die Galerie in Fluidverbindung mit der Einlassöffnung (52) ist.

8. Eine Pumpenanordnung gemäß Anspruch 7, wobei die Gehäuse-Teilanordnung einen Reagenz-Durchlass (130) von der Einlassöffnung zu der Galerie definiert, wobei der Strömungspfad durch den Reagenz-Durchlass, die Galerie und die eine oder mehreren Strömungsöffnung(en) vorgesehen ist.

9. Eine Pumpenanordnung gemäß einem der Ansprüche 6 bis 8, wobei der Körper des Umspritzelements eine Vielzahl von Strömungsöffnungen (142) aufweist.

10. Eine Pumpenanordnung gemäß Anspruch 9, wobei die Pumpe-Teilanordnung eine metallische Rückplatte (114) mit einer oder mehreren Bohrung(en) (144) aufweist, wobei jede Strömungsöffnung ausgebildet ist, mit einer Bohrung ausgerichtet zu sein.

11. Eine Pumpenanordnung gemäß einem der Ansprüche 9 oder 10, wenn abhängig von Anspruch 4, wobei ein Solenoidspulekabel von dem elektrischen Verbindungselement (58) durch das Umspritzelement zwischen Reagenz-Strömungsöffnungen zu der Solenoidspule geführt wird.

12. Ein Verfahren zur Herstellung einer Pumpenanordnung, das ein Herstellen einer Pumpe-Teilanordnung aufweist, durch:
Vorsehen eines Rohlingelements aus einem Material mit einer relativ hohen magnetischen Permeabilität;
Tiefziehen des Rohlingelements, um ein äußeres Polstück zu formen, wobei das äußere Polstück ein internes Volumen mit einer Öffnung definiert;
Vorsehen eines Spulenkörpers (108), wobei der Spulenkörper ein internes Volumen definiert;
Wickeln eines Spulendrahts (110) auf den Spulenkörper, um eine Solenoidspule zu formen;
Einfügen der Solenoidspule in das interne Volumen des äußeren Polstücks (106);
Drücken einer hinteren Anschlagsplatte (114) in das äußere Polstück, wobei die hintere Anschlagsplatte zumindest einer Bohrung durch die Platte hat;
Spritzgießen eines Umspritzelements (102), um das äußere Polstück und die Solenoidspule einzukapseln;
Bilden zumindest einer Strömungsöffnung (142) durch das Umspritzelement, wobei die zumindest eine Strömungsöffnung mit der zumindest einen Bohrung in der hinteren Anschlagsplatte ausgerichtet ist;
Bilden zumindest einer Rille (140) in der Außenfläche des Umspritzelements.

13. Ein Verfahren gemäß Anspruch 12, das weiter ein Einfügen eines Aktuatorpumpenkerns in das interne Volumen des Spulenkörpers aufweist.

14. Ein Verfahren gemäß Anspruch 12 oder 13, das ein Platzieren eines O-Ring-Dichtungselements in die zumindest eine Rille in der Außenfläche des Umspritzelements und Einfügen der Pumpe-Teilanordnung in eine Gehäuse-Teilanordnung aufweist.

## Revendications

1. Assemblage formant pompe (100) destiné à être utilisé dans un système de réduction catalytique sélectif, l'assemblage formant pompe comprenant :
un sous-ensemble de pompe (12) définissant un axe de pompe (A) ; et
un sous-ensemble de boîtier (30) incluant une cavité (120) pour recevoir le sous-ensemble de pompe, et comprenant un orifice d'entrée (52) pour recevoir un réactif destiné à être fourni au sous-ensemble de pompe via un trajet d'écoulement (130, 132, 142) ;
dans lequel au moins un élément formant joint (134, 136, 138) est prévu pour sceller le sous-ensemble de pompe à l'intérieur du sous-ensemble de boîtier, l'élément formant joint étant prévu dans une gorge (140) dans une face extérieure du sous-ensemble de pompe, l'élément formant joint assurant un joint étanche aux fluides,
**caractérisé en ce que** le sous-ensemble de pompe comprend un coeur de pompe (104), un élément polaire extérieur (106), et une bobine solénoïde (110), le coeur, l'élément polaire et la bobine étant prévus à l'intérieur d'un élément de surmoulage sur la bobine (102).

2. Assemblage formant pompe selon la revendication 1, comprenant en outre un compartiment (122) défini en partie par le sous-ensemble de pompe et le sous-ensemble de boîtier, dans lequel ledit au moins un élément formant joint comprend un élément de joint de compartiment (138) agencé pour séparer le compartiment et le trajet d'écoulement, l'élément de joint de compartiment étant prévu dans une gorge dans une face extérieure du sous-ensemble de pompe, l'élément de joint de compartiment assurant un joint étanche aux fluides entre le compartiment et le trajet d'écoulement.

3. Assemblage formant pompe selon la revendication 1 ou 2, dans lequel le sous-ensemble de boîtier comprend un perçage (126) ayant une ouverture dans une surface extérieure de sous-ensemble de boîtier, et le sous-ensemble de pompe comprend une portion en goulot (124) avec une forme sensiblement complémentaire au perçage, dans lequel ledit au moins un élément formant joint comprend un élément de joint de perçage (134, 136) agencé pour sceller la portion en goulot dans le perçage, l'élément de joint de perçage étant prévu dans une gorge dans une face extérieure de la portion en goulot du sous-ensemble de pompe et assurant un joint étanche aux fluides entre l'ouverture du perçage et le trajet d'écoulement.

4. Assemblage formant pompe selon la revendication 3, dans lequel la portion en goulot est disposée autour de l'axe A et définit un trou (128) agencé pour recevoir un moyen formant connecteur électrique (58) pour une connexion à une bobine de solénoïde (110).

5. Assemblage formant pompe selon l'une quelconque des revendications précédentes, dans lequel l'élément de surmoulage est formé en matière plastique.

6. Assemblage formant pompe selon l'une quelconque des revendications précédentes, dans lequel le trajet d'écoulement comprend un ou plusieurs orifices d'écoulement (142) prévus dans le corps de l'élément de surmoulage.

7. Assemblage formant pompe selon la revendication 6, dans lequel une galerie à réactif (132) est définie entre le sous-ensemble de boîtier et le sous-ensemble de pompe, lesdits un ou plusieurs orifices d'écoulement (142) étant agencés pour s'ouvrir dans la galerie, et la galerie étant en communication fluidique avec l'orifice d'entrée (52).

8. Assemblage formant pompe selon la revendication 7, dans lequel le sous-ensemble de boîtier définit un passage à réactif (130) depuis l'orifice d'entrée vers la galerie, le trajet d'écoulement étant constitué par le passage à réactif, par la galerie et par lesdits un ou plusieurs orifices d'écoulement.

9. Assemblage formant pompe selon l'une quelconque des revendications 6 à 8, dans lequel le corps de l'élément de surmoulage comprend une pluralité d'orifices d'écoulement (142).

10. Assemblage formant pompe selon la revendication 9, dans lequel le sous-ensemble de pompe comprend une plaque dorsale métallique (114) ayant un ou plusieurs perçages (144), chaque orifice d'écoulement étant agencé de manière alignée avec un perçage.

11. Assemblage formant pompe selon l'une ou l'autre des revendications 9 et 10, prise en dépendance de la revendication 4, dans lequel un câble de bobine solénoïde depuis l'élément formant connecteur électrique (58) est passé à travers l'élément de surmoulage entre les orifices d'écoulement de réactif vers la bobine solénoïde.

12. Procédé de fabrication d'un assemblage formant pompe comprenant la fabrication d'un sous-ensemble de pompe par les étapes consistant à :
fournir un élément d'ébauche en forme de disque en un matériau ayant une perméabilité magnétique relativement élevée ;
emboutir l'élément d'ébauche en forme de disque pour former une pièce polaire extérieure, la pièce polaire extérieure définissant un volume interne avec une ouverture ;
fournir un support formateur de bobine (108), le support formateur de bobine définissant un volume interne ;
enrouler le fil de bobine (110) sur le support formateur de bobine pour former une bobine solénoïde ;
insérer la bobine solénoïde dans le volume interne de la pièce polaire extérieure (106) ;
presser une plaque d'arrêt dorsale (114) dans la pièce polaire extérieure, la plaque d'arrêt dorsale ayant au moins un perçage à travers la plaque ;
mouler par injection un élément de surmoulage (102) pour encapsuler la pièce polaire extérieure et la bobine solénoïde ;
former au moins un orifice d'écoulement (142) à travers l'élément de surmoulage, ledit au moins un orifice d'écoulement étant aligné avec ledit au moins un perçage dans la plaque d'arrêt dorsale ;
former au moins une gorge (140) dans la face extérieure de l'élément de surmoulage.

13. Procédé selon la revendication 12, comprenant en outre l'étape consistant à insérer un coeur de pompe d'actionnement dans le volume interne du support de bobine.

14. Procédé selon la revendication 12 ou 13, comprenant l'étape consistant à placer un élément d'étanchement en forme de joint torique dans ladite au moins une gorge dans la face extérieure de l'élément de surmoulage, et à insérer le sous-ensemble de pompe dans un sous-ensemble de boîtier.
